# EUROPÄISCHE PATENTANMELDUNG

(11) **EP 2 801 554 A1**
(43) Veröffentlichungstag der Anmeldung: **12.11.2014**
(21) Anmeldenummer: 14167296.4
(22) Anmeldetag: 07.05.2014
(51) Int. Cl.: C02F 9/00, C02F 5/08

(54) **Verfahren zum Reduzieren der Kalkbelastung in durch Leitungen geführtem Wasser und Vorrichtung zum Durchführen des Verfahrens**

(30) Priorität: 08.05.2013 DE 102013007995
(71) Anmelder: Schwarting, Isolde, 26160 Bad Zwischenahn (DE)
(72) Erfinder: Schwarting, Isolde, 26160 Bad Zwischenahn (DE)
(74) Vertreter: Jabbusch, Matthias

(57) **Zusammenfassung**

Bei einem Verfahren zum Reduzieren der Kalkbelastung in durch Leitungen geführtem Wasser, insbesondere in Trinkwasser, ist vorgesehen, dass der Druck des Wassers in zumindest einem Abschnitt dieser Leitungen reduziert wird und dass anschließend dem Wasser Anlagebausteine für den im Wasser vorhandenen Kalk hinzugefügt werden.

Eine Vorrichtung zum Reduzieren der Kalkbelastung in durch Leitungen geführten Wasser, insbesondere in Trinkwasser, umfassend zumindest eine Leitung für das Wasser, zeichnet sich dadurch aus, dass sie zumindest eine Einrichtung zum Reduzieren des Wasserdrucks aufweist, die einem Abschnitt der Leitung zugeordnet ist, wobei diesem Abschnitt in Fließrichtung des Wassers eine Einbringungseinrichtung für Anlagebausteine für Kalk nachgeordnet ist.

## Beschreibung

Die Erfindung betrifft ein Verfahren zum Reduzieren der Kalkbelastung in durch Leitungen geführtem Wasser, insbesondere in Trinkwasser. Des Weiteren betrifft die Erfindung eine Vorrichtung zum Reduzieren der Kalkbelastung in durch Leitungen geführtem Wasser, insbesondere Trinkwasser, umfassend zumindest eine Leitung für das Wasser. Die Vorrichtung dient vorzugsweise zum Durchführen des vorgenannten Verfahrens.

In Wasser, insbesondere in Trinkwasser, sind Kalk und Kohlensäure gelöst. Die Bindungskapazität von Kohlensäure in Wasser wird dadurch erhöht, dass das Wasser in Verteilungssystemen (Trinkwasserversorger) unter Druck steht.

Je höher der Betriebsdruck ist, desto höher ist die Aufnahmekapazität des Wassers für Kohlensäure. Je höher der Anteil von Kohlensäure im Wasser ist, desto höher ist die Lösungskapazität für Kalk im Wasser. Bei der Gewinnung, Verteilung und Nutzung von Wasser hat das Kalk-Kohlensäure-Gleichgewicht eine wichtige Bedeutung:
Das chemische Gleichgewicht zwischen den Ionen der Kohlensäure - dem Kohlendioxid und dem Calciumcarbonat wird als "Kalk-Kohlensäure-Gleichgewicht" bezeichnet. Es bestimmt wesentlich die kalkabscheidenden oder die kalkauflösenden Eigenschaften des Wassers.

Je nach der Beschaffenheit des Brunnenwassers wird u.a. von den Wasserversorgern dann zentral Kohlensäure dem Wasser unter Druck zugefügt oder entgast, wenn im Rohwasser kalkabscheidende Eigenschaft vorhanden ist. Mit dieser Maßnahme wird in das Versorgungsnetz Trinkwasser im Kalk-Kohlensäure-Gleichgewicht eingespeist. Eine Kalkabscheidung an den Innenwänden des Versorgungsnetzes und den daran angeschlossenen Geräten und Komponenten kann damit verhindert werden. Dabei wird aus Gründen der Volksgesundheit in der Regel Kalk im gewonnenen Brunnenwasser so belassen, wie es gewonnen wird. Kalk ist ein notwendiges Element beim menschlichen Stoffwechsel und gibt dem Wasser einen positiven Geschmack.

Ein Überschuss an Kalk wird durch Zugabe von Kohlensäure ausgeglichen, um das Kalk-Kohlensäure-Gleichgewicht zu stabilisieren. Enthält das Brunnenwasser umgekehrt einen Überschuss an Kohlensäure, wird durch Zugabe von Kalk das Gleichgewicht hergestellt. Andernfalls würden die unter Druck stehenden Verteilernetze mit allen Komponenten (Ventile etc.) unter Korrosionen leiden und vorzeitig verschleißen. Die Trinkwasserverordnung V 2011 schreibt für das Trinkwasser eine Mindestmenge an Härtebildnern (Kalk) vor (8,4° dH), die im Falle von zu geringer Härte durch Zudosierung bei den Versorgern erreicht wird.

Zum überwiegenden Teil besteht der sog. Kesselstein aus carbonatischen Ablagerungen, wobei die CaCO³ Ablagerungen die Funktion des Bindemittels übernehmen. Die Frage, ob im Falle einer Übersättigung Calzit oder Aragonit ausgeschieden wird, ist hierbei sekundär, da die kristallchemischen Unterschiede für die Ausbildung der jeweiligen Modifikationen minimal sind und so auch in der Praxis keine sichere Vorhersage getroffen werden kann. In Abhängig von der Wasserzusammensetzung treten jedoch auch sulfatische, silikatische, oxidische und oxihydratische Verbinder als Kesselsteinbildner auf. Der Kesselstein ist um so härter, je höher der Anteil an Gips und Silikaten ist, so dass er in Extremfällen die mechanische Härte von Porzellan erreichen kann. Die mechanische Härte nimmt ab, wenn Minerale wie Goethit (FeOOH) u.ä. ausgeschieden werden. Es ist hinreichend bekannt, dass dies zu unerwünschten technischen Folgen führen kann, wie z.B. nachlassender Wärmeübergang bei Wärmetauschern etc. Infolgedessen werden in der Praxis zahlreiche Anstrengungen unternommen, die Bildung derartiger Ablagerungen zu verhindern. Neben den bekannten chemischen Verfahren zur Enthärtung von Trink- und Brauchwasser haben sich in den letzten 20 Jahren neue Verfahren der sog. Physikalischen Wasserbehandlung etabliert, die mit Verfahren zur Bildung von Impfkristallen, also Anlagebausteinen für im Wasser vorhandenen Kalk, arbeiten. Anlagen, die nach den zwischenzeitlich vom DVGW entwickelten Normen zum Nachweis der Wirksamkeit (DVGW-Arbeitsblatt W 510) zertifiziert sind, dürfen nach der neu aufgenommen Ziff. 12.7 der neuen DIN EN 1988 in Trinkwasserinstallationen eingebaut und betrieben werden.

Dies ist eine Alternative zu den chemischen und mit Salz betriebenen Enthärtungsverfahren. Im Gegensatz zu den chemischen Verfahren werden bei den Kalkschutzgeräten dem Wasser keine Härtebildner entzogen und nichts hinzugefügt. Die Härtebildner verbleiben im Wasser. Der pH-Wert sinkt nicht ab. Es entsteht keine Korrosionsneigung. Dabei nutzen die Verfahren die heterogene Keimbildung beim Übergang aus der gelösten Phase in die kristalline Form der Härtebildner. Das Kalk-Kohlensäuregleichgewicht bzw. die Übersättigung der Flüssigkeit mit Kalk spielt dabei für den Beginn und den Ablauf der heterogenen Kristallisation eine ent-scheidende Rolle. Es ist allgemein bekannt, dass bei Temperaturanhebung der Flüssigkeit die darin gebundene Kohlensäure bevorzugt ausgast und damit das Ungleichgewicht herbeiführt. Das ist auch der Grund für die allgemein bekannte starke Verkalkung z.B. der Trinkwassererwärmungsanlagen mit den daran angeschlossenen Installationen.

Im Kaltwasser ist die Ausgasung eher gering, was in den betreffenden Leitungsabschnitten eher zu geringer Verkalkungsneigung führt. Es ist im Handwerk Sanitär allgemein bekannt, dass die Neigung zur Verkalkung erst ab 40°C beginnt, überproportional zuzunehmen (vgl. DVGW-Arbeitsblätter). Das Kaltwasser darf aus hygienischen Gründen nicht über 25° C warm sein (DIN EN 806). Aus Gründen der Hygiene sind in den Trinkwassererwärmungsanlagen und den daran angeschlossenen Leitungen und Geräten eine Mindesttemperatur von mindestens 60° C im Speicher und 55° C im Zirkulationsrücklauf vorgeschrieben (DVGW-Arbeitsblatt W 551, Ziff. 5.2.2, 6.1 und 6.4).

Bei diesen Temperaturen kommt es zu einer Störung des Kalk-Kohlensäure-gleichgewichts mit der Folge von Kalkausfällung im System. Die Wirksamkeit von Kalkschutzverfahren mit Impfkristallisation ist abhängig von der Ausfällneigung des Kalkes im Wasser.

Der Erfindung liegt die Aufgabe zugrunde, ein Verfahren sowie eine Vorrichtung der eingangs genannten Gattung aufzuzeigen, mit dem bzw. mit der die Kalkbelastung in Wasser reduziert werden und mit dem bereits entstandene Verkalkungen abgebaut werden können.

Diese Aufgabe ist verfahrensseitig erfindungsgemäß dadurch gelöst, dass der Druck des Wassers in zumindest einem Abschnitt der Leitungen reduziert wird und dass anschließend dem Wasser Anlagebausteine für den im Wasser vorhandenen Kalk hinzugefügt werden.

Dieses Verfahren besteht in der Herbeiführung der Entgasung aus Flüssigkeiten bei konstantem Druck in einem geschlossenen Leitungssystem durch die Herbeiführung wenigstens eines auf einem Streckenabschnitt partiellen Druckabfalls im Volumenstrom, ohne dabei einen konstanten Druckabfall oder -verlust im gesamten Leitungssystem zu haben. Die Flüssigkeit kann konstant strömen und beginnt nicht, in Druckstößen oder frequenten Schwankungen Störungen und Schäden zu verursachen.

Dabei wird die Tatsache genutzt, dass bei Druckabfall durch eine bestimmte Form und Ausdehnung eines Ventils (z.B. Venturidüse) die Kohlensäure relativ schnell ausgast, bei Rückkehr in den Hauptstrom der Leitung gemeinsam mit der Flüssigkeit aber relativ lange braucht, um wieder in die Flüssigkeit gelöst zurückzukehren - Henry-Gesetz. In dieser Phase der Ausgasung wird das Kalk-Kohlensäuregleichgewicht so stark gestört, dass es zu einer lokalen Übersättigung mit und einer Ausfällung von Kalk kommt. Setzt man das Verfahren so im Leitungsnetz ein, dass unmittelbar nach der Entgasung die Flüssigkeit in ein handelsübliches Kalkschutzgerät geführt wird, kann sich im Kalkschutzgerät die Ausfällung von Kalk in bestimmter Form entfalten: Mit den verschiedenen Wirkverfahren der Kalkschutzgeräte wird durch Einbringen von Anlagebausteinen für Kalk der Vorgang der heterogenen Keimbildung ausgelöst. Die Anzahl der so in den Geräten in der Flüssigkeit gebildeten Impfkristalle pro m³ ist signifikant höher, je stärker in dieser Phase der Wasserbehandlung die Ausfällung von Kalk ist. Mit dem erfindungsgemäßen Verfahren wird diese Anzahl pro m³ erhöht im Vergleich zu Kaltwasser, dass nicht vorher von der Kohlensäure entgast wurde. Mit der höheren Konzentration von im Kaltwasser gebildeten Impfkristallen verläuft die anschließende Bildung von weiteren Impfkristallen (Schneeballeffekt) im Warm-/Heißwasser mit einer höheren Rate, wenn durch die in den kalten Kalkschutzgeräten gebildeten Keime in einer höheren Konzentration pro m³ Flüssigkeit im erwärmten Wasser zur Verfügung stehen.

Es ist somit von Vorteil, wenn vor einem Kalkschutzgerät zum Einbringen von Anlagebausteinen, nämlich Impfkristallen, das Kalk-Kohlensäuregleichgewicht durch partiellen Druckabfall gestört wird. Die Kohlensäure im Kaltwasser gast vor dem Gerät aus und begünstigt damit die Bildung von Impfkristallensowohl die Intensität als auch den zeitlichen Ablauf der heterogenen Keimbildung in den Geräten. Dann ist das in die Trinkwassererwärmung einströmende Kaltwasser bereits so stark mit Impfkristallen aus der Ausfällung in den Geräten durchsetzt, dass die heterogene Keimbildung bei weiterer Ausgasung der Kohlensäure im Warmwasser sich wesentlich intensiver fortsetzt und eine Keimbildung auf den Oberflächen der Wärmetauscher und der Installation damit signifikant vermindert/verhindert wird.

Der Vorteil ist, dass mit der kalten, druckkonstanten Entgasung vor den Kalkschutzgeräten
1. entweder die Kalkschutzgeräte pro Einheit in der Leistung der Impfkristallbildung wesentlich gesteigert werden
2. oder die Kalkschutzgeräte in Verbindung mit dem erfindungsgemäßen Verfahren vergleichsweise kleiner und damit preiswerter gebaut werden können, um die gleiche Kapazität für den Kalkschutz zu entwickeln.

Nach einer ersten Weiterbildung der Erfindung wird als Anlagebaustein für den Kalk ein Granulat mit hoher Bindungswirkung für Kalk verwendet.

Im Abschnitt der Druckreduzierung kann das Wasser zusätzlich verwirbelt werden, um das Ausfällen des Kalkes zu unterstützen.

Die vorrichtungsseitige Lösung der Aufgabe ist erfindungsgemäß dadurch gekennzeichnet, dass die Vorrichtung zumindest eine Einrichtung zum Reduzieren des Wasserdrucks aufweist, die einem Abschnitt der Leitung zugeordnet ist, wobei diesem Abschnitt in Fließrichtung des Wassers eine Einbringungseinrichtung für Anlagebausteine für Kalk nachgeordnet ist.

In der Einrichtung zum Reduzieren des Wasserdrucks wird in wenigstens einem Abschnitt der Leitung der Wasserdruck reduziert. Diese Druckreduzierung führt zu einem Austreten von Kohlensäure aus dem Wasser, daraufhin fällt Kalk aus. Mit der erfindungsgemäßen Vorrichtung ist die Ausgasung der Kohlensäure aus dem Wasser steuerbar. Die Ausgasungsstation in der Einrichtung zum Reduzieren des Wasserdrucks ist dabei im geschlossenen Drucksystem angeordnet, der Wasserdruck wird lediglich partiell reduziert.

Die Einrichtung zum Reduzieren des Wasserdrucks kann dabei beispielsweise eine selbst ansaugende Zahnradpumpe sein, wobei in Fließrichtung des Wassers vor der Zahnradpumpe ein Strangreduzierungsventil für das Wasser angeordnet ist. Dieses Strangreduzierungsventil reguliert den Durchfluss des Wassers, es reduziert diesen beispielsweise auf 20 Liter pro Minute. Die Pumpe kann dann auf etwa 40 Liter pro Minute Ansaugvolumen ausgelegt sein, aufgrund dieser voneinander verschiedenen Volumina entsteht ein Unterdruck auf dem Fließweg vom Strangregulierungsventil zur Pumpe. Auf diesem Weg wird das Wasser entspannt, Kohlendioxid tritt aus dem Wasser aus, da die Kohlensäure ausgast. Gleichzeitig tritt Kalk aus dem Wasser aus.

In Fließrichtung des Wassers kann nach der Zahnradpumpe in der Leitung ein Rückschlagventil angeordnet sein, welches zur Verwirbelung des Wassers und dabei zur weiteren Ausgasung und Ausfällung führt. Zudem kann dem Wasser im Bereich der Zahnradpumpe ein vergrößerter Innenquerschnitt zur Verfügung gestellt, auch dies führt zur Entspannung des Wassers.

Nach einer alternativen Weiterbildung ist die Einrichtung zum Reduzieren des Wasserdrucks zumindest eine Venturidüse mit nachgeordneter Kaviolstrecke. Auch mit dieser gelingt ein partielles Reduzieren des Wasserdrucks mit den beschriebenen Folgen. In der Venturidüse wird der Fließweg für das Wasser zunächst verengt und anschließend erweitert. Durch diesen Düseneffekt tritt bei der anschließenden Erweiterung wiederum eine Entspannung des Wassers ein, da der Druck sinkt. Hier kann ein Ausgasen des Kohlendioxids eintreten. Die Kaviolstrecke führt von diesem erweiterten Abschnitt der Venturidüse zurück in den verengten Abschnitt der Venturidüse. Im verengten Abschnitt wird das Wasser beschleunigt, es kann aus der Kaviolstrecke Medien entnehmen, dadurch werden aus dem erweiterten Abschnitt Medien in die Kaviolstrecke nachgeführt. Insgesamt ergibt sich ein Kreislauf der zu einer Schaumbildung führen kann.

Einem Leitungsabschnitt können nacheinander zwei Einrichtungen zum Reduzieren des Wasserdrucks zugeordnet sein.

Die Einbringungseinrichtung für die Anlagebausteine für den Kalk ist vorzugsweise als Injektor ausgebildet. Über diesen können die Anlagebausteine eingebracht werden, ohne dass der Druck im geschlossenen System reduziert wird. Das Einbringen der Anlagebausteine erfolgt insbesondere noch in dem Zustand, wo das Wasser aus dem Bereich des Unterdruckes gerade wieder in den Bereich mit Normaldruck übergeht. Das Kohlendioxid kehrt nicht unmittelbar in das Wasser zurück. Nun kann das Wasser die Anlagebausteine für die heterogene Impfkristallisation intensiver aufnehmen, ohne dass die so gebildeten Impfkristalle sofort wieder in Lösung übergehen.

Dies wäre der Fall, wenn die Störung des Kalk-Kohlensäure-Gleichgewichts dadurch wieder rückgängig gemacht würde, dass die entgaste Kohlensäure nach dem erfindungsspezifischen Verfahren sofort wieder in das Wasser aufgenommen würde. Durch die nachhaltige Störung des Kalk-Kohlensäure-Gleichgewichts gelingt eine stabile und nachhaltige Impfung des Wassers mit den Anlagebausteinen für die Impfkristallisation.

Ein Ausführungsbeispiel der Erfindung, aus dem sich weitere erfinderische Merkmale ergeben, ist in der Zeichnung dargestellt. Es zeigen:
- Fig. 1:: eine schematische Seitenansicht einer Vorrichtung zum Reduzieren der Kalkbelastung in durch Leitungen geführtem Wasser und
- Fig. 2:: eine maßstäblich vergrößerte Schnittansicht eines Bauteils der Vorrichtung gemäß Fig. 1.

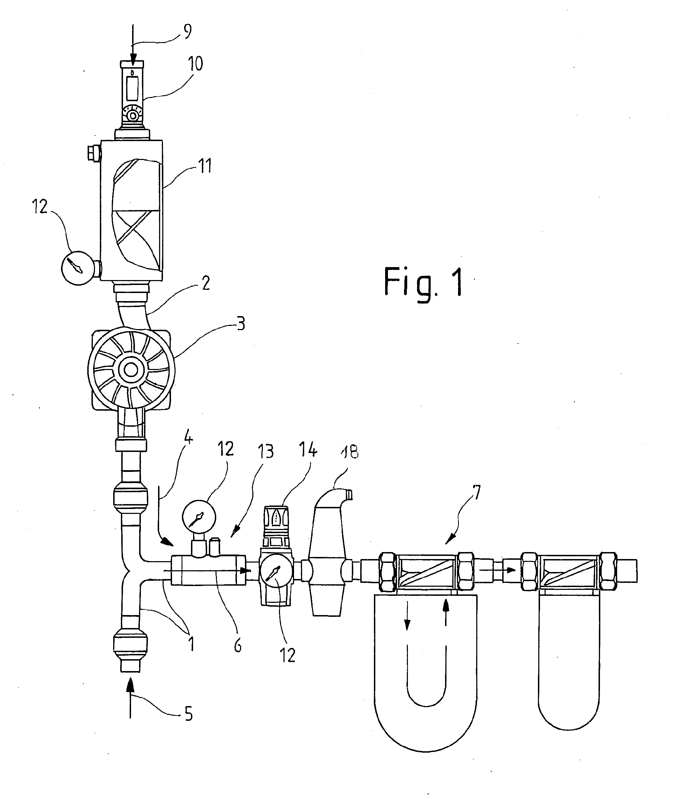

Fig. 1 zeigt eine Leitung 1 für Kaltwasser, in welche eine Zirkulationsleitung 2 einmündet. In die Zirkulationsleitung 2 ist eine Zahnradpumpe 3 eingesetzt. Mit Hilfe dieser Zahnradpumpe 3 kann in der Zirkulationsleitung 2 ein Bereich mit reduziertem Wasserdruck innerhalb der Zirkulationsleitung 2 erzeugt werden.

In Fließrichtung des Wassers gemäß Pfeil 9 innerhalb der Zirkulationsleitung 2 ist vor der Zahnradpumpe 3 ein Strangulationsventil 10 angeordnet. Zwischen dem Strangulationsventil 10 und der Zahnradpumpe 3 enthält die Zirkulationsleitung 2 noch eine Verwirbelungseinrichtung 11, der ein Manometer 12 zur Kontrolle des Drucks des Wassers innerhalb der Zirkulationsleitung 2 zugeordnet ist.

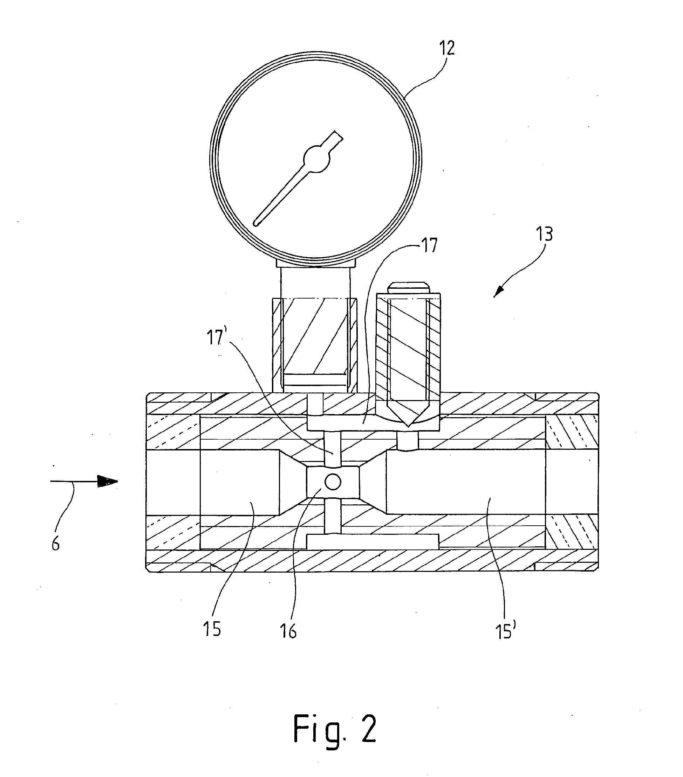

Dieses Wasser mit reduziertem Druck wird dann aus der Zirkulationsleitung 2 entlang Pfeil 4 in die Leitung 1 eingeführt. Hier vermischt es sich mit entlang der Pfeile 5, 6 zugeführtem Kaltwasser, das so vermischte Kaltwasser passiert zunächst eine Venturidüse 13, die in Fig. 2 dargestellt ist. In dieser erfolgt ein weiteres partielles Reduzieren des Drucks des Wassers in der Leitung 1. Das Wasser wird dann einer Einbringungseinrichtung 7 für Anlagebausteine für Kalk zugeführt. Diese Einbringungseinrichtung enthält einen Injektor.

Bei der Vorrichtung in Fig. 1 wird somit zunächst eine Reduzierung des Druckes in einem Abschnitt der Zirkulationsleitung 2 vorgenommen, anschließend erfolgt dann in der Venturidüse 13 ein Reduzieren des Druckes in dem gemischten, aus den Leitungen 2 und 1 gebildeten Wassers.

Die Venturidüse 13 ist dazu mit einem Manometer 12 ausgerüstet, nachfolgend ist einem Druckminderer 14 ein weiteres Manometer 12 zugeordnet. Die Druckverhältnisse innerhalb der Leitungen können so überwacht werden.

Über ein Entgasungsventil 18 kann nachfolgend Kohlendioxid aus der Leitung 1 entfernt werden. Dieses Gas kann somit nicht wieder in das Wasser eintreten.

Fig. 2 zeigt die Venturidüse 13 mit dem Manometer 12. In der Venturidüse 13 ist in Fließrichtung des Wassers, Pfeil 6, ausgehend von einem erweiterten Abschnitt 15 ein verengter Abschnitt 16 gegeben, der wiederum in einen erweiterten Abschnitt 15' einmündet. Hindurchfließendes Wasser wird zunächst im Abschnitt 16 komprimiert und beschleunigt, im Abschnitt 15' kann die Fließrichtung verlangsamt werden, das Wasser entspannt sich, der Druck fällt ab. In diesem Abschnitt 15' kann somit Kohlendioxid ausgasen, dieses kann mit Wasserbestandteilen in eine Kaviolstrecke 17 eintreten, welche in den Abschnitt 16 mündende Bereiche 17' hat. In den Bereichen 17' vorhandenes Medium wird durch das Wasser im Abschnitt 16 mitgerissen. Über die Kaviolstrecke 17 kann sich ein Kreislauf ausbilden.

## Patentansprüche

1. Verfahren zum Reduzieren der Kalkbelastung in durch Leitungen geführtem Wasser, insbesondere in Trinkwasser,
**dadurch gekennzeichnet,**
**dass** der Druck des Wassers in zumindest einem Abschnitt dieser Leitungen (1, 2) reduziert wird und dass anschließend dem Wasser Anlagebausteine für den im Wasser vorhandenen Kalk hinzugefügt werden.

2. Verfahren nach Anspruch 1, **dadurch gekennzeichnet, dass** als Anlagebausteine ein Granulat mit hoher Bindungswirkung für Kalk verwendet wird.

3. Verfahren nach Anspruch 1 oder 2, **dadurch gekennzeichnet, dass** das Wasser im Abschnitt der Druckreduzierung verwirbelt wird.

4. Vorrichtung zum Reduzieren der Kalkbelastung in durch Leitungen geführtem Wasser, insbesondere in Trinkwasser, umfassend zumindest eine Leitung für das Wasser,
**dadurch gekennzeichnet,**
**dass** sie zumindest eine Einrichtung zum Reduzieren des Wasserdrucks aufweist, die einem Abschnitt der Leitung (1, 2) zugeordnet ist, wobei diesem Abschnitt in Fließrichtung des Wassers eine Einbringungseinrichtung (7) für Anlagebausteine für Kalk nachgeordnet ist.

5. Vorrichtung nach Anspruch 4, **dadurch gekennzeichnet, dass** die Einrichtung zum Reduzieren des Wasserdrucks eine selbstansaugende Zahnradpumpe (3) ist, und dass in Fließrichtung des Wassers vor der Zahnradpumpe (3) ein Strangregulierungsventil für das Wasser angeordnet ist.

6. Vorrichtung nach Anspruch 5, **dadurch gekennzeichnet, dass** in Fließrichtung des Wassers nach der Zahnradpumpe (3) in der Leitung (2) ein Rückschlagventil angeordnet ist.

7. Vorrichtung nach Anspruch 5 oder 6, **dadurch gekennzeichnet, dass** die Leitung (2) im Bereich der Zahnradpumpe (3) einen vergrößerten Innenquerschnitt hat.

8. Vorrichtung nach Anspruch 4, **dadurch gekennzeichnet, dass** die Einrichtung zum Reduzieren des Wasserdrucks zumindest eine Venturi-Düse mit nachgeordneter Kaviolstrecke ist.

9. Vorrichtung nach einem der Ansprüche 4 bis 8, **dadurch gekennzeichnet, dass** die Einbringungseinrichtung (7) für die Anlagebausteine als Injektor (8) ausgebildet ist.
